# EUROPÄISCHE PATENTSCHRIFT

(11) **EP 3 712 010 B1**
(45) Veröffentlichungstag und Bekanntmachung des Hinweises auf die Patenterteilung: **22.03.2023**
(21) Anmeldenummer: 19209481.1
(22) Anmeldetag: 15.11.2019
(51) Int. Cl.: B60P 7/08, B61D 45/00, B64D 9/00

(54) **ZURRPUNKT MIT MONTAGESTELLUNG**
LASHING POINT WITH ASSEMBLY POSITION
POINT D'ANCRAGE POURVU DE POSITION DE MONTAGE

(30) Priorität: 21.03.2019 DE 202019101641 U
(43) Veröffentlichungstag der Anmeldung: 23.09.2020
(73) Patentinhaber: Thiele GmbH & Co. KG, 58640 Iserlohn (DE)
(72) Erfinder: Norpoth, Bernd, 45309 Essen (DE)
(74) Vertreter: Osterhoff, Utz

(56) Entgegenhaltungen:
- DE-A1-102011 101 907
- DE-A1-102015 211 295
- DE-U1-202017 101 234
- US-A- 4 167 273

## Beschreibung

Die vorliegende Erfindung betrifft einen Zurrpunkt gemäß den Merkmalen im Obergriff von Anspruch 1.

Zurrpunkte zählen zum Beispiel durch das deutsche Gebrauchsmuster DE 20 2008 008 418 U1 zum Stand der Technik. Derartige Zurrpunkte besitzen eine Schwenkachse für einen Bügel, der aus einer Tasche herausgezogen und in eine Zurrposition verlagert werden kann. Das Verzurren der Ladung erfolgt unter Zugbelastung des Bügels, der selbsttätig eine Winkellage in Längsrichtung des Zurrmittels einnimmt. Hierbei sollte ein minimaler Winkel zur Ladefläche nicht unterschritten werden. Es ist bekannt, dass sich der Bügel an einer Rückwand des Zurrpunktes abstützen soll und nicht an Einrichtungen auf der Ladefläche, wie zum Beispiel Lichtgitter. Dadurch soll die Beschädigung der Ladefläche vermieden werden. Es ist vorgeschlagen worden, die Rückwand abzukröpfen, damit der abgewinkelte Bügel flächig an einer Oberseite der Rückwand zur Anlage kommt. Allerdings wird der Abstand zwischen der Schwenkachse und der Rückwand dadurch verkleinert. Bei einer Zugbelastung, die einem Winkel kleiner als dem minimal einstellbaren Winkel des Bügels entspricht, wird der Bügel im Kontaktbereich mit der Rückwand daher stark auf Biegung beansprucht, was zu unerwünschten Spannungsspitzen führen kann.

Ferner ist aus der gattungsbildenden DE 20 2015 100 750 U1 ein Zurrpunkt bekannt. Hierbei ist an einer Rückseite des Ösenkörpers ein Stütznocken ausgebildet. Wird der Ösenkörper aus der Kulisse herausgezogen und in eine Zurrstellung bzw. Gebrauchsstellung in Richtung zu der Ladefläche gebracht, so liegt der Stütznocken auf einer Oberseite der Kassette bzw. der Ladefläche auf, weshalb der Ösenkörper in der Gebrauchsstellung verbleibt. Ein anwendender Monteur kann somit nur eine Hand verwenden, um einen entsprechenden Haken oder ein sonstiges Zurrmittel in die Öse des Ösenkörpers einzuhängen bzw. einzufädeln.

Ferner ist aus der US 4,167,237 A ein Zurrpunkt bekannt, welcher an einer Ladefläche eines Kraftfahrzeuges angeordnet ist.

Weiterhin sind aus der DE 10 2015 211 295 A1 und der DE 10 2011 101 907 A1 Zurrpunkte an Ladeflächen von Vorrichtungen zur Ladungssicherung mit Zurrpunkten aus dem Stand der Technik bekannt.

Die DE 20 2017 101234 U1 offenbart den Oberbegriff des unabhängigen Anspruchs.

Aufgabe der vorliegenden Erfindung ist es, einen Zurrpunkt hinsichtlich seiner Fertigung und auch seiner Handhabung gegenüber aus dem Stand der Technik bekannten Zurrpunkten zu verbessern.

Die zuvor genannte Aufgabe wird erfindungsgemäß mit einem Zurrpunkt an einer Ladefläche eines Transportfahrzeuges mit den Merkmalen im Oberbegriff von Anspruch 1 gelöst.

Vorteilhafte Ausgestaltungsvarianten der vorliegenden Erfindung sind Gegenstand der abhängigen Ansprüche.

Der erfindungsgemäße Zurrpunkt ist zur Anordnung an einer Ladefläche eines Transportfahrzeuges vorgesehen. Der Zurrpunkt kann mit einem Hebe-, Zug- oder Zurrmittel gekoppelt werden, indem ein Ösenkörper relativ beweglich in einer Kassette gelagert ist und von einer in der Kassette befindlichen Ruhestellung in eine Gebrauchsstellung herausziehbar ist. In der Kassette ist in seitlich angeordneten Kulissenblechen jeweils eine Kulissenführung ausgebildet. Der Ösenkörper selbst weist in einem unteren Bereich seitlich überstehende Arme auf, wobei die Arme in die Kulissenführung eingreifen. Wird der Ösenkörper von einer Ruhestellung in eine Gebrauchsstellung geführt, so werden die Arme durch die Kulisse bewegt. Insbesondere bedeutet dies, dass auf die Vertikalrichtung bezogen die Öse nach oben aus der Ruhestellung herausgezogen wird.

Erfindungsgemäß ist nunmehr vorgesehen, dass der Ösenkörper in einer bestimmten Gebrauchsstellung angeordnet ist, in welcher er zur Anbindung der Hebe-, Zug- oder Zurrmittel gehalten wird, welche Montagestellung genannt wird. Dies geschieht erfindungsgemäß dergestalt, dass in einer Rückseite des Ösenkörpers eine Vertiefung bzw.

Einmuldung ausgebildet ist. Die Rückseite des Ösenkörpers ist die Seite des Ösenkörpers, die zur Ladefläche hin orientiert ist. In der Montagestellung liegt die Vertiefung an einer Kante formschlüssig auf. Die Kante kann dabei an der Kassette oder der Ladefläche ausgebildet sein. Alternativ kann ein Fortsatz vorgesehen sein, wobei der Fortsatz selbst an der Kassette ausgebildet ist bzw. an der Ladefläche ausgebildet ist. Der Fortsatz greift dann formschlüssig in die Vertiefung ein.

Durch das Zusammenspiel von Fortsatz und Vertiefung bzw. Aufliegen der Vertiefung an einer Kante, ist zum einen das Halten in der Montagestellung verbessert. Es hat sich erfindungsgemäß darüber hinaus herausgestellt, dass die Vertiefung keine Schwächung des Ösenkörpers hervorruft hinsichtlich seiner Gebrauchseigenschaften zum Verzurren an der Ladefläche. Dadurch, dass die Vertiefung produktionstechnisch einfach in den Ösenkörper eingebracht werden kann, ist auch die Herstellung eines erfindungsgemäßen Zurrpunktes gegenüber dem Stand der Technik verbessert.

Die Vertiefung selbst kann dabei durchgehend über die gesamte Breite des Ösenkörpers ausgebildet sein. Dies ist insbesondere Vorteilhaft, wenn die Vertiefung an einer Kante zur Auflage kommt.

Die Vertiefung selbst kann jedoch auch nur punktartig bzw. längenabschnittsweise ausgebildet sein. Dies ist vorteilig, wenn entsprechende Fortsätze in die Vertiefung eingreifen.

Es können dann in einem Abstand zueinander zwei oder mehr Vertiefungen nebeneinander ausgebildet sein. Bevorzugt sind dann auch entsprechende Fortsätze nebeneinander angeordnet, welche formschlüssig in die Vertiefung eingreifen.

Die Vertiefung ist dergestalt ausgebildet, dass diese gegenüber einer diese umgebenden bzw. umrandenden bzw. benachbarten Fläche der Rückseite zurückversetzt ausgebildet ist. Zurückversetzt bedeutet in Richtung des Ösenkörpers hinein.

Die Vertiefung selbst ist bevorzugt in ihrem Querschnitt dreieckförmig oder muldenförmig, ganz besonders bevorzugt rechteckförmig ausgebildet.

Der Fortsatz ist in seinem Querschnitt insbesondere korrespondierend zu dem Querschnitt der Vertiefung ausgebildet, sodass in der Montagestellung ein sicheres Halten durch einen Formschluss gewährleistet ist.

Die Vertiefung ist an dem Ösenkörper selbst unterhalb einer Öffnung zur Ausbildung der Öse angeordnet. Alternativ oder ergänzend ist die Vertiefung oberhalb, einer durch die Arme gebildeten Achse, angeordnet. Diese Positionierung erlaubt es, insbesondere den Ösenkörper in der Montagestellung im Bereich einer Kante der Kassette bzw. Kante der Ladefläche abzustützen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt.

Diese dienen dem einfachen Verständnis der Erfindung.

Es zeigen:
- Figur 1: einen erfindungsgemäßen Zurrpunkt in Gebrauchsstellung in perspektivischer Darstellung,
- Figur 2: den Zurrpunkt in Ruhestellung,
- Figur 3: eine Seitenansicht zur Figur 1,
- Figur 4: eine Längsschnittansicht zur Figur 3,
- Figur 5: eine Kassette mit Fortsatz in alternativer Ausgestaltungsvariante,
- Figur 6: den Zurrpunkt aus Figur 2 in einer nach außen geschwenkten Gebrauchsstellung in perspektivischer Ansicht,
- Figur 7a und b: eine Seitenansicht und eine Längsschnittansicht zu Figur 6,
- Figur 8: eine Draufsicht zu Figur 6
- Figur 9a, b und c: zeigt eine alternative Ausgestaltungsvariante hinsichtlich des Aufliegens der Öse an einer Kante der Ladefläche sowie der Öse in Rückansicht
- Fig. 10a, b und c: zeigt eine zu Figur 9 ausgebildete Alternative, wobei die Ausnehmung durch eine Abkröpfung hergestellt ist.

In den Figuren werden für gleiche oder ähnliche Bauteile dieselben Bezugszeichen verwendet, auch wenn eine wiederholte Beschreibung aus Vereinfachungsgründen entfällt.

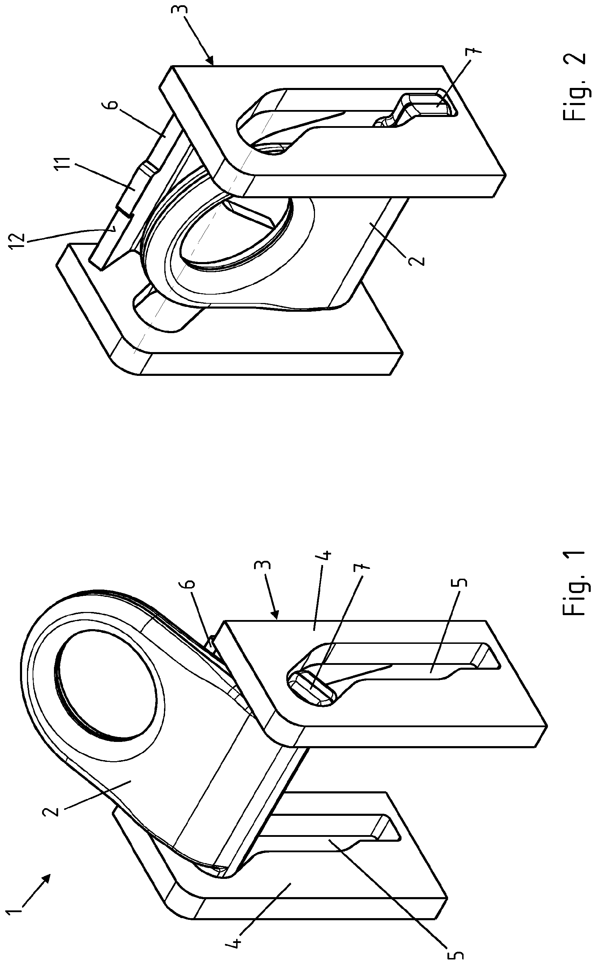

Figur 1 zeigt den erfindungsgemäßen Zurrpunkt 1 in einer perspektivischen Ansicht in Montagestellung. Ein Ösenkörper 2 ist gegenüber einer Kassette 3 herausgezogen. Die Kassette 3 ist in dieser Ausgestaltungsvariante durch zwei seitliche Kulissenbleche 4 sowie entsprechende Kulissen 5 ausgebildet, ebenfalls ist ein die Kulissenbleche 4 verbindender Steg 6 bzw. Rückenblech angeordnet. Seitlich abstehende Arme 7 des Ösenkörpers 2 greifen dabei in die Kulissen 5 ein und führen somit den Ösenkörper 2 innerhalb der Kulisse 5. Der Ösenkörper 2 kann somit von der in Figur 1 dargestellten Montagestellung in einer in Figur 2 dargestellten Ruhestellung innerhalb der Kassette 3 verbracht bzw. abgesenkt werden.

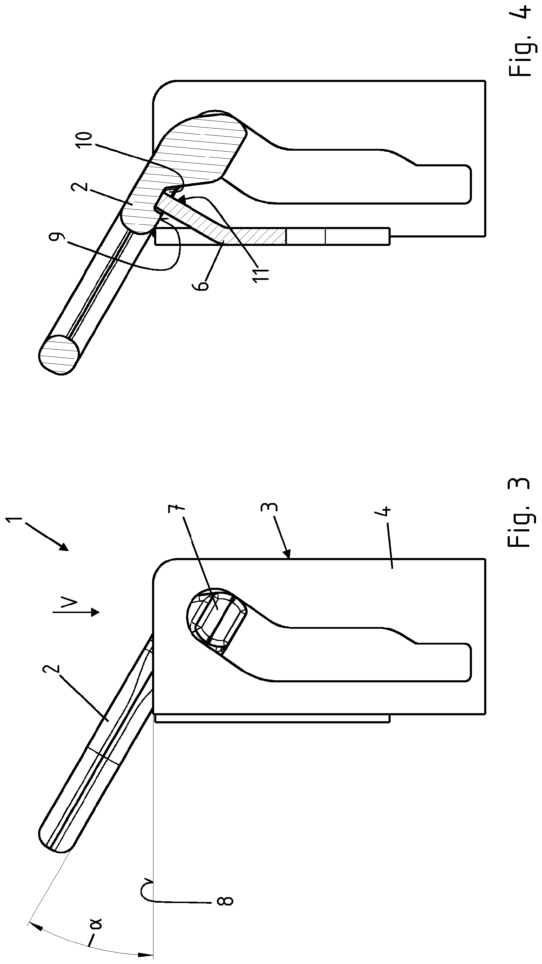

Befindet sich, wie in Figur 3 dargestellt, der Ösenkörper 2 in der Montagestellung, ist dieser zumindest teilweise aus der Kassette 3 ausgezogen und in einem Winkel Alpha α zu einer Ladefläche 8 angeordnet. Der Winkel Alpha α kann in der Montagestellung bevorzugt 20 bis 40° insbesondere 25 bis 35° und ganz besonders bevorzugt 30° betragen. Aufgrund der Schwerkrafteinwirkung würde nunmehr der Ösenkörper 2 in Vertikalrichtung V bezogen auf die Bildebene nach unten in die Kassette 3 zurückgleiten. Erfindungsgemäß wird dies, dargestellt in Figur 4, welche eine Längsschnittansicht gemäß Figur 3 darstellt, vermieden, indem an einer Rückseite 9 des Ösenkörpers 2 eine Vertiefung 10 ausgebildet ist. Ein Fortsatz 11 des rückseitig angeordneten Steges 6 greift in die erfindungsgemäße Vertiefung 10 formschlüssig ein und hält somit den Ösenkörper 2 sicher gelagert in der dargestellten Montagestellung. Die Vertiefung 10 selbst ist in ihrem Querschnitt im Wesentlichen rechteckförmig konfiguriert, der Fortsatz 11 ebenfalls. Der Fortsatz 11 ist auch dargestellt in Figur 2. Hier ist zu erkennen, dass der Fortsatz 11 über die Breite 14 des Steges 6 nur abschnittsweise ausgebildet ist. Entsprechend ist die Vertiefung 10 an der Rückseite 9 des Ösenkörpers 2 auch nur längenabschnittsweise über die Breite 14 der Ösenkörper 2 ausgebildet. Die Vertiefung 10 kann jedoch auch über die ganze Breite 14 der Rückseite 9 des Ösenkörpers 2 ausgebildet sein. Gemäß der Ausgestaltungsvariante von Figur 2 ist der gesamte Steg 6 abgewinkelt ausgebildet, sodass der Fortsatz 11 gegenüber dem Steg 6, insbesondere einer Stirnfläche 12 des Steges 6 überstehend ausgebildet ist.

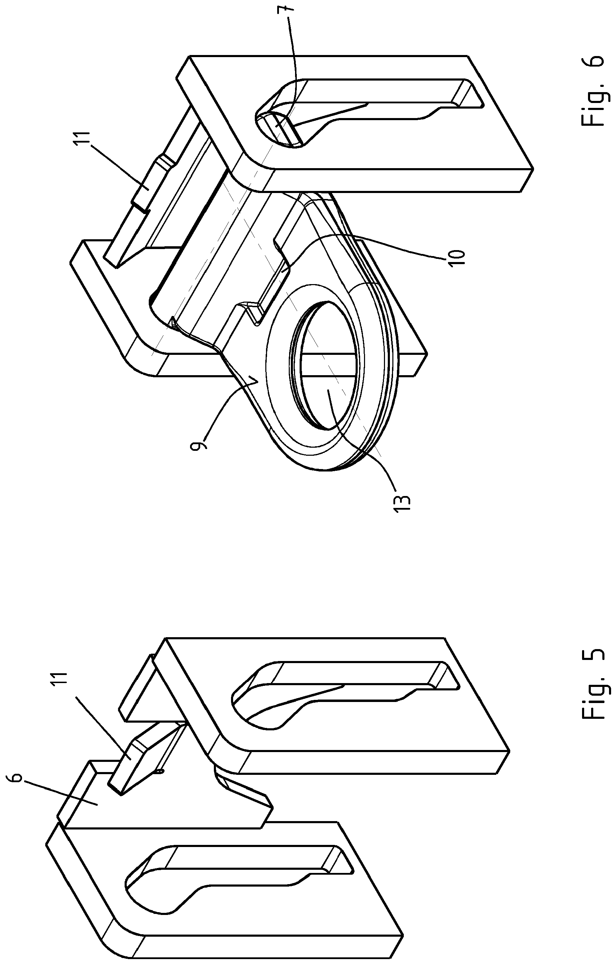

Eine Alternative ist dargestellt in Figur 5. Hier ist der Steg 6 als Stegblech im Wesentlichen flächig bzw. gerade ausgebildet. Der Fortsatz 11 ist abwinkelt ausgebildet, sodass ebenfalls wiederum in der Montagestellung der Fortsatz 11 formschlüssig eingreift.

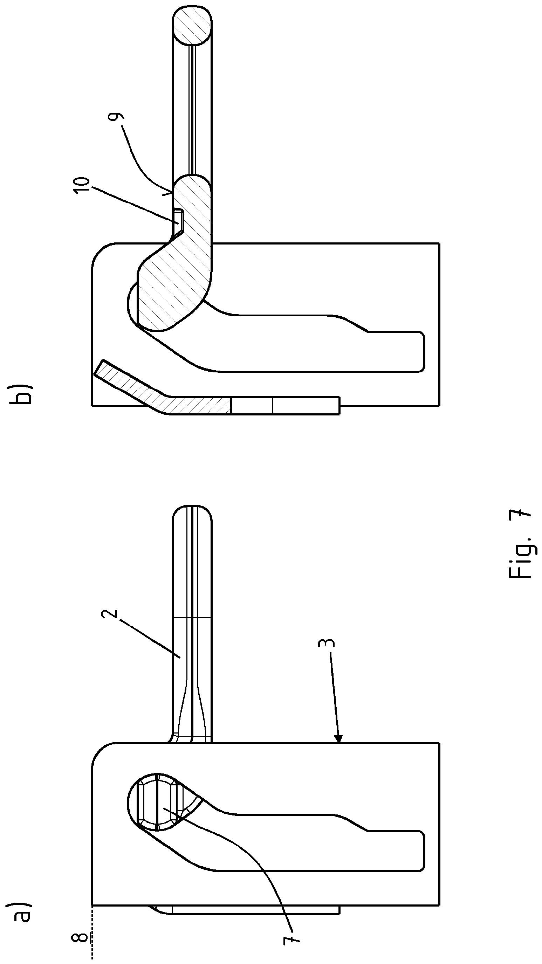

Gemäß Figur 6, welche die erste Ausführungsvariante zeigt, kann eine weitere Gebrauchsstellung eingenommen werden, nochmals dargestellt in Figur 7a und b. Figur 7a zeigt eine Seitenansicht zu Figur 6. Figur 7b zeigt eine dazu korrespondierende Längsschnittansicht. Hier dargestellt ist, dass die Vertiefung 10 gegenüber der diese berandenden Fläche bzw. Bereich der Rückseite 9 zurückversetzt ausgebildet ist. Die Öse ist bezogen auf eine angedeutete Ladefläche 8 nach außen geschwenkt und steht im Wesentlichen senkrecht von der Kassette 3 ab. Gemäß der Darstellung in Figur 6 ist zu erkennen, dass die Vertiefung 10 gegenüber benachbarten bzw. der die Vertiefung 10 umgebenden Fläche der Rückseite 9 zurückversetzt ist. Die Vertiefung 10 ist unterhalb einer Öffnung 13, welche die Öse in dem Ösenkörper 2 ausbildet, angeordnet und oberhalb einer durch die Arme 7 ausgebildeten Achse. Es können weitere nicht dargestellte Gebrauchsstellungen eingenommen werden, aufgrund der Schwenkbarkeit des Ösenkörpers 2 in der oberen Position in der Kulisse.

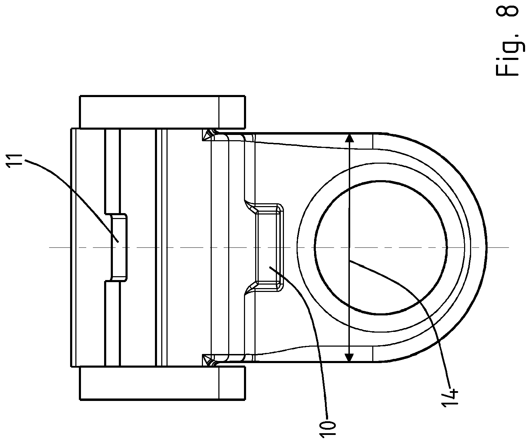

Gemäß einer Draufsicht von Figur 6, dargestellt in Figur 8, ist die Vertiefung 10 über die Breite 14 des Ösenkörpers 2 nur längenabschnittsweise ausgebildet, entsprechend korrespondierend ist der Fortsatz 11 ebenfalls längenabschnittsweise ausgebildet. Denkbar ist auch, jedoch hier nicht näher dargestellt, dass nebeneinander, bezogen auf die Breite, zwei oder mehr Vertiefungen 10 ausgebildet sind. Die Vertiefungen 10 könnten bspw. auch nur punktförmig ausgebildet sein, ebenfalls, wie bereits zuvor erwähnt, kann die Vertiefung 10 über die gesamte Breite 14 der Rückseite 9 verlaufend ausgebildet sein.

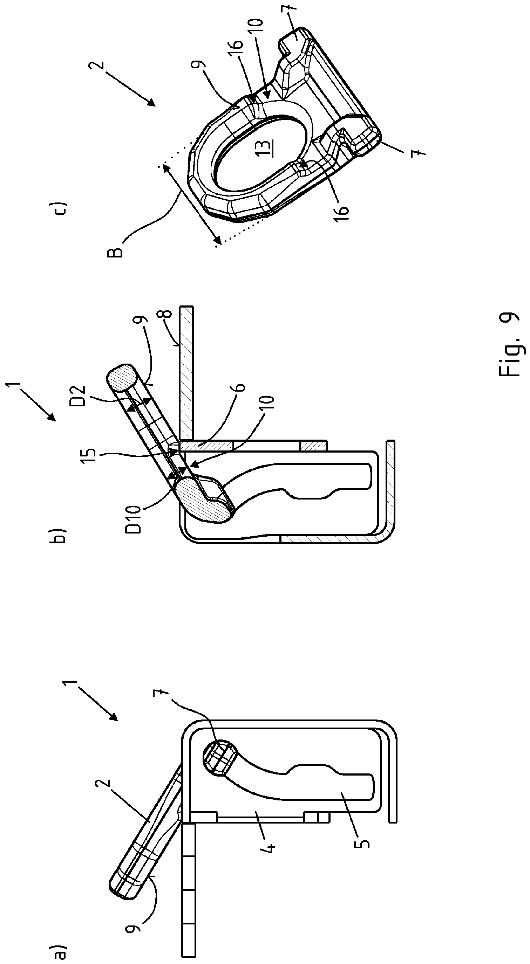

Figur 9a und b zeigt eine Seitenansicht sowie eine seitliche Schnittansicht des erfindungsgemäßen Zurrpunktes. Der Ösenkörper 2 weist an seiner Rückseite 9 eine ausgebildete Vertiefung 10 auf. Mit dieser Vertiefung 10 liegt er an einer Kante 15 der Ladefläche 8 in der Montagestellung auf. Hierdurch wird ein Absenken des Ösenkörpers 2 in die Ruhestellung verhindert. Ein entsprechendes Zurrmittel kann mit dem Ösenkörper 2 gekoppelt werden, ohne dass der Ösenkörper 2 separat festgehalten wird.

Figur 9c zeigt eine Rückansicht des Ösenkörpers 2. Zu erkennen ist, dass sich die Vertiefung 10 über die gesamte Breite B des Ösenkörpers 2 erstreckt. Die Vertiefung 10 ist selbst auf einer derartigen Höhe angeordnet, dass sie zumindest teilweise in die Öffnung 13 des Ösenkörpers 2 hinein ausgebildet ist. Die Vertiefung 10 kann jedoch auch weiter bezogen auf die Bildebene nach rechts unten liegen, so dass sie unterhalb der Öffnung des Ösenkörpers 2 angeordnet wäre.

Die Vertiefung 10 gemäß Figur 9 ist derart ausgebildet, dass im Bereich der Vertiefung 10 die Öse eine geringere Dicke D10 aufweist als im Bereich des restlichen Ösenkörpers 2. Dies bedeutet, dass die Dicke D2 größer ist als die Dicke D10. Die Vertiefung 10 bildet somit einen Absatz 16 aus, wobei der Absatz 16 an der Kante 15 der Ladefläche 8 aufliegt.

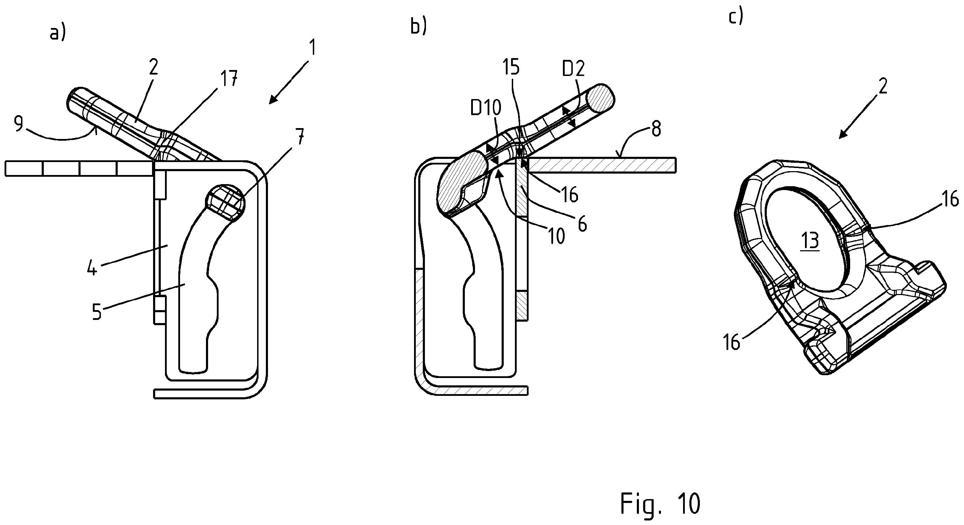

Figur 10a, b und c zeigen dazu eine alternative Ausgestaltungsvariante. Diese entspricht im Wesentlichen der in Figur 9 dargestellten Ausführungsvariante. Auch hier ist an der Rückseite 9 des Ösenkörpers 2 eine entsprechende Vertiefung 10 ausgebildet. Diese Vertiefung 10 des Ösenkörpers 2 ist durch eine Abkröpfung 17 des Ösenkörpers 2 ausgebildet. Die Dicke des Ösenkörpers D2 entspricht dabei im Wesentlichen der Dicke D10 des Ösenkörpers 2. Im Bereich der Abkröpfung 17 wird somit ebenfalls ein Absatz 16 ausgebildet, so dass wiederum der Absatz 16 an der Kante 15 der Ladefläche 8 in der Montagestellung aufliegt.

Die Kante 15 kann bei diesen Figuren wie dargestellt ausgebildet sein durch das Rückenblech bzw. den Steg 6 des Zurrpunktes 1. Auch hier erstreckt sich dann die Vertiefung 10 über die gesamte Breite des Ösenkörpers 2.

### Bezugszeichen:

- 1 -: Zurrpunkt
- 2 -: Ösenkörper
- 3 -: Kassette
- 4 -: Kulissenblech
- 5 -: Kulisse
- 6 -: Steg
- 7 -: Arm
- 8 -: Ladefläche
- 9 -: Rückseite
- 10 -: Vertiefung
- 11 -: Fortsatz
- 12 -: Stirnfläche zu 6
- 13 -: Öffnung
- 14 -: Breite zu 2
- 15 -: Kante
- 16 -: Absatz
- 17 -: Abkröpfung

- α -: Winkel
- B -: Breite
- D2 -: Dicke zu 2
- D10 -: Dicke zu 2 im Bereich 10

## Patentansprüche

1. Zurrpunkt (1), welcher zur Anordnung an einer Ladefläche (8) eines Transportfahrzeuges vorgesehen ist, wobei der Zurrpunkt (1) mit einem Hebe-, Zug- oder Zurrmittel koppelbar ist und einen Ösenkörper (2) und eine Kassette (3) umfasst , wobei der Ösenkörper (2) relativ beweglich in der Kassette (3) gelagert ist und von einer in der Kassette (3) befindlichen Ruhestellung in eine Montagestellung herausziehbar ist, wobei die Kassette (3) in seitlich angeordneten Kulissenblechen (4) eine Kulissenführung aufweist und der Ösenkörper (2) seitlich überstehende Arme (7) aufweist, die in die Kulissenführung eingreifen, **dadurch gekennzeichnet, dass** eine Rückseite (9) des Ösenkörpers (2), wobei die Rückseite (9) des Ösenkörpers (2) in Montagestellung zu der Ladefläche (8) orientiert ist, eine Vertiefung (10) aufweist, dergestalt, dass in der Montagestellung die Vertiefung (10) an einer Kante formschlüssig aufliegt oder ein Fortsatz (11) der Kassette (3) bzw. der Ladefläche (8) formschlüssig in die Vertiefung (10) eingreift und dass die Vertiefung (10) gegenüber der diese umgebenden Fläche der Rückseite (9) zurückversetzt ausgebildet ist.

2. Zurrpunkt (1) nach Anspruch 1, **dadurch gekennzeichnet, dass** die Vertiefung (10) durchgehend sich über die gesamte Breite (14) des Ösenkörpers (2) erstreckt.

3. Zurrpunkt (1) nach Anspruch 1 oder 2, **dadurch gekennzeichnet, dass** die Vertiefung (10) punktartig oder längenabschnittsweise ausgebildet ist.

4. Zurrpunkt (1) nach einem der vorangegangenen Ansprüche, **dadurch gekennzeichnet, dass** zwei oder mehr Vertiefungen (10) nebeneinander ausgebildet sind.

5. Zurrpunkt (1) nach einem der vorangegangenen Ansprüche, **dadurch gekennzeichnet, dass** die Vertiefung (10) in ihrem Querschnitt dreieckförmig oder muldenförmig oder rechteckförmig ausgebildet ist.

6. Zurrpunkt (1) nach einem der vorangegangenen Ansprüche, **dadurch gekennzeichnet, dass** in einem oberen Bereich der Kassette (3) ein Fortsatz (11) ausgebildet ist, welcher in die Vertiefung (10) des Ösenkörpers (2) in Montagestellung eingreift.

7. Zurrpunkt (1) nach einem der vorangegangenen Ansprüche, **dadurch gekennzeichnet, dass** die Vertiefung (10) unterhalb einer Öffnung (13) der Öse der Ösenkörpers (2) angeordnet ist und/oder dass die Vertiefung (10) oberhalb einer durch die Arme (7) gebildeten Achse angeordnet ist.

8. Zurrpunkt (1) nach einem der vorangegangenen Ansprüche, **dadurch ge-kennzeichnet**, dass der Ösenkörper (2) im Bereich der Vertiefung (10) eine Dicke (D10) aufweist, die geringer ist als die Dicke (D2) des restlichen Ösenkörpers (2), insbesondere der Dicke (D2) des Ösenkörpers (2) im Bereich der Öffnung (13).

9. Zurrpunkt (1) nach einem der vorangegangenen Ansprüche, **dadurch ge-kennzeichnet**, dass der Ösenkörper (2) in sich abgekröpft ausgebildet ist, dergestalt, dass sich an der Rückseite des Ösenkörpers (2) eine Vertiefung (10) mit einem Absatz (16) durch die Abkröpfung (17), insbesondere unterhalb der Abkröpfung (17) ergibt.

## Claims

1. Lashing point (1), intended for arrangement on a loading surface (8) of a transport vehicle, wherein the lashing point (1) can be coupled to a hoisting or lashing means and comprises an eyelet body (2) and a cassette (3), the eyelet body (2) being mounted for relative movement in the cassette (3) and capable of being pulled out from a rest position located in the cassette (3) into an assembly position, the cassette (3) having a guide slot in laterally arranged slotted plates (4) and the eyelet body (2) having laterally projecting arms (7) which engage in the guide slot, **characterised in that** a rear side (9) of the eyelet body (2), the rear side (9) of the eyelet body (2) being oriented towards the loading surface (8) in the assembly position, has an indentation (10) in such a way that, in the assembly position, the indentation (10) rests in a form-fitting manner on an edge, or an extension (11) of the cassette (3) or of the loading surface (8) engages in a form-fitting manner in the indentation (10), and **in that** the indentation (10) is set back relative to the surface of the rear side (9) surrounding it.

2. Lashing point (1) according to claim 1, **characterised in that** the indentation (10) extends continuously over the entire width (14) of the eyelet body (2).

3. Lashing point (1) according to claim 1 or 2, **characterised in that** the indentation (10) is formed in a point-like manner or in longitudinal sections.

4. Lashing point (1) according to any one of the preceding claims, **characterised in that** two or more indentations (10) are formed side by side.

5. Lashing point (1) according to any one of the preceding claims, **characterised in that** in cross-section the indentation (10) is triangular or trough-shaped or rectangular.

6. Lashing point (1) according to any one of the preceding claims, **characterised in that** an extension (11) is formed in an upper region of the cassette (3), which extension engages in the assembly position in the indentation (10) of the eyelet body (2).

7. Lashing point (1) according to any one of the preceding claims, **characterised in that** the indentation (10) is arranged below an opening (13) of the eyelet of the eyelet body (2) and/or **in that** the indentation (10) is arranged above an axis formed by the arms (7).

8. Lashing point (1) according to any one of the preceding claims, **characterised in that** in the region of the indentation (10) the eyelet body (2) has a thickness (D10) which is less than the thickness (D2) of the rest of the eyelet body (2), in particular the thickness (D2) of the eyelet body (2) in the region of the opening (13).

9. Lashing point (1) according to any one of the preceding claims, **characterised in that** the eyelet body (2) is configured to be bent on itself in such a way that on the rear side of the eyelet body (2) an indentation (10) with a shoulder (16) is produced by the bend (17), in particular below the bend (17).

## Revendications

1. Point d'ancrage (1) qui est prévu pour être agencé au niveau d'une surface de charge (8) d'un véhicule de transport, dans lequel le point d'ancrage (1) peut être couplé à un moyen de traction et de levage ou d'ancrage et comporte un corps d'oeillet (2) et une cassette (3), dans lequel le corps d'oeillet (2) est logé de manière relativement mobile dans la cassette (3) et peut être retiré d'une position de repos se trouvant dans la cassette (3) dans une position de montage, dans lequel la cassette (3) présente dans des tôles de coulisse (4) agencées latéralement un guidage de coulisse, et le corps d'oeillet (2) présente des bras (7) dépassant latéralement qui viennent en prise dans le guidage de coulisse, **caractérisé en ce qu'**un côté arrière (9) du corps d'oeillet (2), dans lequel le côté arrière (9) du corps d'oeillet (2) est orienté en position de montage vers la surface de charge (8), présente une cavité (10) de telle manière que dans la position de montage, la cavité (10) repose contre une arête par complémentarité de formes ou un prolongement (11) de la cassette (3) ou de la surface de charge (8) vienne en prise par complémentarité de formes dans la cavité (10) et que la cavité (10) soit réalisée en déport par rapport à la surface l'entourant du côté arrière (9).

2. Point d'ancrage (1) selon la revendication 1, **caractérisé en ce que** la cavité (10) s'étend en continu sur la largeur entière (14) du corps d'oeillet (2).

3. Point d'ancrage (1) selon la revendication 1 ou 2, **caractérisé en ce que** la cavité (10) est réalisée de manière ponctuelle ou par section longitudinale.

4. Point d'ancrage (1) selon l'une quelconque des revendications précédentes, **caractérisé en ce que** deux ou plus cavités (10) sont réalisées les unes à côté des autres.

5. Point d'ancrage (1) selon l'une quelconque des revendications précédentes, **caractérisé en ce que** la cavité (10) est réalisée dans sa section transversale en forme de triangle ou d'auge ou de rectangle.

6. Point d'ancrage (1) selon l'une quelconque des revendications précédentes, **caractérisé en ce qu'**un prolongement (11) est réalisé dans une zone supérieure de la cassette (3), lequel vient en prise dans la cavité (10) du corps d'oeillet (2) en position de montage.

7. Point d'ancrage (1) selon l'une quelconque des revendications précédentes, **caractérisé en ce que** la cavité (10) est agencée en dessous d'une ouverture (13) de l'œillet du corps d'oeillet (2) et/ou que la cavité (10) est agencée au-dessus d'un axe formé par les bras (7).

8. Point d'ancrage (1) selon l'une quelconque des revendications précédentes, **caractérisé en ce que** le corps d'oeillet (2) présente dans la zone de la cavité (10) une épaisseur (D10) qui est inférieure à l'épaisseur (D2) du corps d'oeillet (2) restant, en particulier l'épaisseur (D2) du corps d'oeillet (2) dans la zone de l'ouverture (13).

9. Point d'ancrage (1) selon l'une quelconque des revendications précédentes, **caractérisé en ce que** le corps d'oeillet (2) est réalisé de manière coudée en lui de telle manière qu'il résulte une cavité (10) avec un épaulement (16) par le coudage (17), en particulier en dessous du coudage (17) au niveau du côté arrière du corps d'oeillet (2).
